# FASCICULE DE BREVET EUROPEEN

(11) **EP 3 625 930 B1**
(45) Date de publication et mention de la délivrance du brevet: **31.03.2021**
(21) Numéro de dépôt: 18723844.9
(22) Date de dépôt: 16.05.2018
(51) Int. Cl.: H04L 12/10

(54) **PROCEDE ET SYSTEME DE TRANSMISSION SERIE DE DONNEES**
VERFAHREN UND SYSTEM ZUR SERIELLEN DATENÜBERTRAGUNG
METHOD AND SYSTEM FOR SERIAL DATA TRANSMISSION

(30) Priorité: 19.05.2017 FR 1754476
(43) Date de publication de la demande: 25.03.2020
(73) Titulaire: Paragon ID, 06250 Mougins (FR)
(72) Inventeur: BRANDIN, Guillaume, 06330 Roquefort les Pins (FR); GIRE, Claude, 06620 Le Bar sur Loup (FR); GERBAULT, Eric, 06140 Vence (FR)
(74) Mandataire: Bronchart, Quentin
(86) Numéro de dépôt international: PCT/EP2018/062675
(87) Numéro de publication internationale: WO 2018/210911

(56) Documents cités:
- EP-A2- 0 366 044
- GB-A- 2 348 552
- US-A- 4 677 646
- US-B1- 6 459 363

## Description

### DOMAINE TECHNIQUE DE L'INVENTION

L'invention concerne le domaine de la transmission série de donnés entre circuits électroniques.

L'invention concerne plus particulièrement un procédé de transmission série de donnés comprenant la transmission, depuis un premier circuit électronique à au moins un deuxième circuit électronique, via une ligne de liaison électrique, permettant la transmission de données de type binaire et l'alimentation électrique du deuxième circuit par le premier circuit, en référence à une ligne de masse commune aux circuits. L'invention concerne également un système de transmission série associé.

Elle trouve pour application particulièrement avantageuse la transmission de données pour affichage et l'alimentation électrique d'un dispositif d'affichage à faible consommation en énergie électrique, tel qu'un papier électronique (ou « e-paper » selon la terminologie anglo-saxonne) qui présente en outre l'avantage de ne pas nécessiter d'énergie pour laisser un texte ou une image affiché.

### ÉTAT DE LA TECHNIQUE

Il existe plusieurs procédés et systèmes de transmission série conformes à la définition générique qu'en donne le préambule ci-dessus.

Les documents de brevet US 6,459,363 B1, GB 2 348 552 A, US 4 677 646 A et EP 0 366 044 A2 divulguent un système de transmission qui compte parmi ceux-ci. En particulier le système divulgué par le document de brevet US 6,459,363 B1 comprend un contrôleur en communication avec des modules via une ligne de transmission à deux fils comprenant un fil d'alimentation et un fil de masse. Le système est tel que les données peuvent être transmises depuis le contrôleur sur la ligne de transmission et reçues au niveau desdits modules. Le signal d'alimentation des modules par le contrôleur est modulé en impulsions. La modulation en impulsions du signal d'alimentation est tel que les modules sont continûment alimentés en énergie électrique au cours d'une même transmission série, de sorte à s'assurer de la continuité de leur fonctionnement.

D'autres système et procédé de transmission série sont connus qui sont adaptés à des applications spécifiques différentes de l'application visée par la présente invention.

Un objet de la présente invention est donc de proposer un procédé et un système de transmission série qui soient spécifiquement adapté à l'application visée. L'invention est définie dans les revendications indépendantes 1 et 15.

### RÉSUMÉ DE L'INVENTION

Pour atteindre cet objectif, selon un mode de réalisation la présente invention prévoit un procédé de transmission série de donnés comprenant la transmission, depuis un premier circuit électronique à au moins un deuxième circuit électronique, via une ligne de liaison électrique entre le premier circuit et le deuxième circuit et en référence à une ligne de masse commune aux circuits, d'au moins une série d'impulsions dites de donnée. Chaque impulsion de donnée permet à la fois d'alimenter électriquement le deuxième circuit et de transmettre une donnée d'une série de données interprétable par le deuxième circuit.

Le procédé comprend au moins les étapes suivantes :
- couper l'alimentation du deuxième circuit par le premier circuit entre deux impulsions de données successives, et
- pour chaque impulsion de donnée et avant que le deuxième circuit ne s'éteigne faute d'alimentation, stocker, sur un support de mémorisation non volatile du deuxième circuit, la donnée transmise par cette impulsion de donnée.

Le procédé est ainsi particulièrement adapté à la transmission série de données depuis un premier circuit vers un deuxième circuit dont le fonctionnement en continu est accessoire, voire à éviter.

Des caractéristiques optionnelles, qui peuvent éventuellement être utilisées en association ou alternativement, sont énoncées ci-dessous :
- la coupure de l'alimentation entre deux impulsions de donnée successives peut être paramétrée de sorte que le deuxième circuit s'éteint faute d'alimentation. L'alimentation du deuxième circuit par le premier circuit est l'unique alimentation prévue pour alimenter le deuxième circuit. Ainsi, une coupure d'alimentation du deuxième circuit par le premier circuit induit l'arrêt du deuxième circuit faute d'alimentation. Pour s'en assurer, la coupure peut être suffisamment longue pour que le deuxième circuit consomme, dissipe ou restitue au premier circuit l'énergie d'alimentation reçue, et le cas échéant partiellement emmagasinée, par exemple dans un condensateur, depuis l'instant auquel la coupure de l'alimentation a été opérée par le premier circuit ;
- chaque impulsion de donnée peut être paramétrée de sorte que la donnée transmise dépende d'une durée de cette impulsion, la durée de chaque impulsion étant le cas échéant mesurable par le deuxième circuit par rapport à une fréquence d'horloge qui lui est propre ;
- au moins une impulsion de donnée de chaque série peut être paramétrée pour transmettre l'une parmi une donnée de bit égal à 0 et une donnée de bit égal à 1, le cas échéant ladite au moins une impulsion de donnée présentant respectivement l'une parmi une première durée correspondant à la donnée de bit égal à 0 et une deuxième durée correspondant à la donnée de bit égal à 1 ;
- chaque série d'impulsions de donnée peut comprendre un nombre prédéterminé d'impulsions de donnée ;
- chaque série d'impulsions de donnée peut comprendre au moins l'une parmi une impulsion de donnée initiale paramétrée pour transmettre une donnée d'initialisation de série et une impulsion de donnée finale paramétrée pour transmettre une donnée de fin de série. L'une correspondante parmi la donnée d'initialisation et la donnée de fin de série peut correspondre à une succession de bits prédéterminés. Le cas échéant, l'impulsion de donnée initiale présente une troisième durée correspondant à la donnée d'initialisation de série et l'impulsion de donnée finale présente une quatrième durée correspondant à la donnée de fin de série ;
- une série d'impulsions de donnée, voire une succession de séries, peut comprendre, de préférence périodiquement, au moins une impulsion de donnée dite de contrôle paramétrée pour transmettre une valeur de contrôle d'une quantité de données destinée à être transmise par la série d'impulsions de donnée, voire par la succession de séries. Le cas échéant, ladite au moins une impulsion de donnée de contrôle présente une cinquième durée correspondant à ladite valeur de contrôle ;
- le stockage des données transmises par les impulsions de donnée d'une même série, voire d'une succession de séries, peut être paramétré de sorte à former un ensemble de bits, voire un ensemble d'octets, codant une commande interprétable et exécutable par un circuit intégré du deuxième circuit.

Le procédé peut en outre comprendre la transmission depuis le premier circuit au deuxième circuit, via la ligne de liaison électrique et en référence à la ligne de masse, d'une impulsion dite de traitement paramétrée pour transmettre un ordre de traitement de ladite commande.

Le procédé peut comprendre alors au moins l'étape suivante : pour chaque impulsion de traitement et avant que celle-ci ne prenne fin, interpréter et exécuter la commande ; le cas échéant, l'impulsion de traitement présente une sixième durée par exemple supérieure à la durée de chacune des impulsions de donnée.

D'autres caractéristiques optionnelles, qui peuvent éventuellement être utilisées en association ou alternativement, sont énoncées ci-dessous :
- l'impulsion de traitement peut être paramétrée pour succéder directement à une impulsion de donnée de sorte que ces deux impulsions forment une seule et même impulsion paramétrée pour permettre, avant que celle-ci ne prenne fin, le stockage de la donnée transmise, et l'interprétation et l'exécution de la commande, sans que le deuxième circuit ne s'éteigne faute d'alimentation,
- l'interprétation et l'exécution de la commande peut comprendre au préalable une vérification de la validité de la commande ; le cas échéant, la vérification de la validité de la commande est basée sur la valeur de contrôle susmentionnée,
- l'interprétation et l'exécution de la commande peuvent comprendre une mise à jour d'un dispositif d'affichage, tel qu'un papier électronique, relié au circuit intégré du deuxième circuit, le cas échéant la mise à jour du dispositif d'affichage permettant l'affichage d'une information définie par la commande.

Le procédé peut en outre comprendre une répétition d'étapes pour obtenir que l'interprétation et l'exécution de la commande comprennent une nouvelle mise à jour du dispositif d'affichage.

Le procédé peut comprendre en outre l'étape suivante : acquitter au moins une impulsion, voire chaque impulsion, transmise. Chaque acquittement peut être paramétré pour succéder directement à une coupure d'alimentation correspondante.

Un autre aspect de la présente invention concerne un système de transmission série de donnés comprenant un premier circuit électronique et au moins un deuxième circuit électronique. Le premier circuit et chaque deuxième circuit sont reliés entre eux via une ligne de liaison électrique entre le premier circuit et le deuxième circuit et une ligne de masse commune aux circuits. Le système est configuré pour permettre la transmission, depuis le premier circuit à chaque deuxième circuit, via la ligne de liaison électrique et en référence à la ligne de masse, d'au moins une série d'impulsions dites de donnée. Chaque impulsion de donnée permet à la fois d'alimenter électriquement le deuxième circuit et de transmettre une donnée d'une série de données interprétable par le deuxième circuit. Le premier circuit comprend un interrupteur de la ligne de liaison électrique entre le premier circuit et le deuxième circuit, l'interrupteur étant configuré pour couper l'alimentation entre deux impulsions de données successives. Le deuxième circuit comprend un support de mémorisation non volatile configuré pour stocker la donnée transmise par chaque impulsion de donnée avant que le deuxième circuit ne s'éteigne faute d'alimentation. Le cas échéant, le système de transmission série est intégré dans une carte à puce.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 illustre schématiquement un mode de réalisation du procédé de transmission série selon l'invention.
La FIGURE 2 illustre schématiquement un autre mode de réalisation du procédé de transmission série selon l'invention.
Les FIGURES 3a et 3b illustrent schématiquement une impulsion dont la transmission est acquittée et une impulsion dont la transmission n'est pas acquittée.
La FIGURE 4 représente schématiquement un système de transmission série selon un mode de réalisation de l'invention.
La FIGURE 5 représente schématiquement un système de transmission série selon un autre mode de réalisation de l'invention.

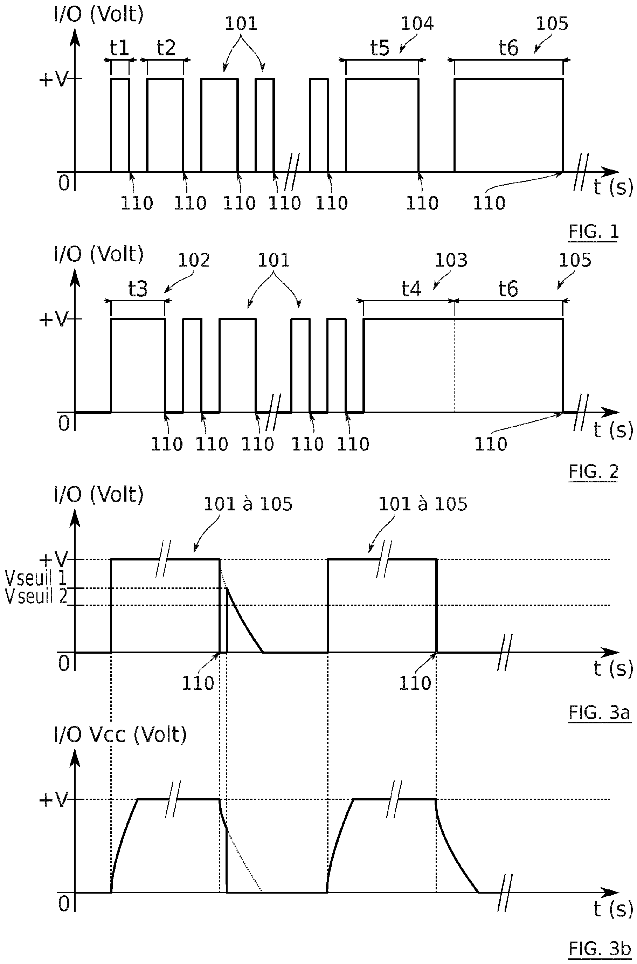

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. Par exemple, sur les figures 3a et 3b, les durées relatives des impulsions et des éventuelles montée/chute de tension ne sont pas nécessairement à l'échelle.

### DESCRIPTION DÉTAILLÉE DE L'INVENTION

On entend par « transmission série » une modalité de transmission de données selon laquelle les éléments d'information se succèdent, les uns après les autres, sur une seule voie de communication entre deux circuits électroniques.

On entend par « impulsion » une variation brève et rapide d'un signal électrique.

On entend par « acquittement » une émission d'un signal par un récepteur pour indiquer à l'émetteur que le message transmis a été bien reçu.

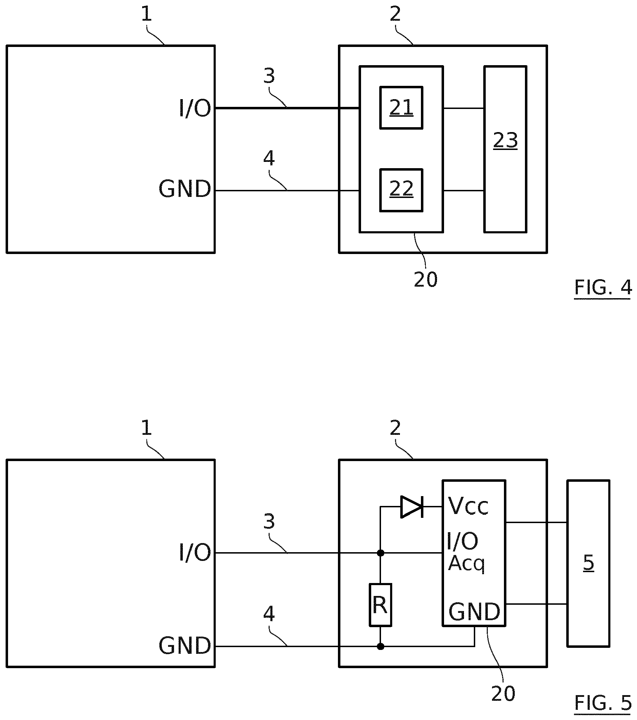

En référence à la figure 4, le système de transmission série selon un mode de réalisation de l'invention comprend un premier circuit électronique 1 et au moins un deuxième circuit électronique 2. Les premier et deuxième circuits 1, 2 sont reliés entre eux par une ligne de liaison électrique 3 et par une ligne de masse 4 commune aux deux circuits 1, 2. Le cas échéant, le premier circuit 1 peut comprendre un interrupteur (non représenté) de l'alimentation du deuxième circuit via la ligne de liaison électrique 3. Le fonctionnement du premier circuit 1 avec les deuxièmes circuits 2 peut notamment utiliser une technologie maître-esclaves. La communication entre le premier circuit 1 et les deuxièmes circuits 2 peut obéir à un protocole asynchrone, qui ne nécessite pas d'utiliser un signal d'horloge global pour les synchroniser.

Le deuxième circuit 2 comprend un support de mémorisation non volatile 21 et un circuit intégré 22, ou moyens de traitement, qui peuvent le cas échéant être compris dans un microprocesseur ou un microcontrôleur 20 du deuxième circuit électronique 2. Le support de mémorisation non volatile 21 peut notamment être une mémoire morte effaçable électriquement et programmable (aussi appelée EEPROM) ou une mémoire de masse à semiconducteurs réinscriptible (ou mémoire flash). Le circuit intégré intègre un timer conférant au deuxième circuit son propre signal d'horloge en fonction duquel il pourra discriminer entre les impulsions de durées différentes entre elles. Le deuxième circuit 2 peut également comprendre un dispositif d'affichage 23 relié au circuit intégré 22 du deuxième circuit 2. En alternative, et comme illustré sur la figure 5, le dispositif d'affichage 5 est déporté depuis le deuxième circuit 2, mais toujours relié au circuit intégré 22 du deuxième circuit.

Selon un mode de réalisation préféré, le dispositif d'affichage 5, 23 comprend un papier électronique ou écran Eink. Le papier électronique est un dispositif d'affichage 5, 23 qui ne nécessite pas d'énergie pour laisser un texte ou une image affiché. Ainsi, à chaque mise à jour du papier électronique, le texte ou l'image qu'il affiche reste visible après que l'alimentation du deuxième circuit 2 par le premier circuit 1 a été coupée, et en particulier lorsque le deuxième circuit 2 est éteint.

Toutefois, le système selon l'invention n'est nullement limité à ce type particulier de dispositif d'affichage 5, 23. Notamment, l'utilisation d'un dispositif d'affichage nécessitant d'être continument alimenter pour afficher un texte ou une image est envisageable. Il peut s'agir par exemple d'une diode électroluminescente organique ou DELo (en anglais, OLED pour « Organic Light-Emitting Diode »). Deux cas peuvent alors être rencontrés.

Premièrement, lorsque l'alimentation du deuxième circuit 2 par le premier circuit 1 est coupée, le dispositif d'affichage 23 s'éteint conjointement au deuxième circuit 2. L'affichage du texte ou de l'image est alors temporaire et limité au plus aux moments auxquels le premier circuit 1 alimente le deuxième circuit 2. La durée de chaque affichage, et par conséquent de l'une au moins parmi des impulsions d'alimentation du deuxième circuit 2 par le premier, peut alors être adaptée à une application particulière. Par exemple, la DELo peut être alimentée par le premier circuit 1 via le deuxième circuit 2 pour afficher un texte ou une image, l'alimentation de la DELo étant maintenue pendant une durée correspondant à l'usage auquel l'affichage est destiné. Avec les moyens de communication actuels, et notamment les smartphones, différentes applications sont envisageables. Notamment, des moyens de lecture, tels qu'une caméra ou un lecteur de code-barres, du texte ou de l'image affiché, tel qu'un QR code ou un symbole, peuvent être destinés à être mis en œuvre pour faire usage de l'affichage.

Deuxièmement, le dispositif d'affichage 5 peut posséder sa propre source d'alimentation électrique. L'affichage peut être ou non maintenu en continu selon l'application visée, de façon indépendante de l'état de fonctionnement ou d'arrêt du deuxième circuit électronique 2.

Le mode de réalisation du système tel qu'illustré sur la figure 5 peut être en tout point conforme au mode de réalisation du système tel que décrit ci-dessus en référence à la figure 4. Le mode de réalisation du système tel qu'illustré sur la figure 5 est toutefois spécifiquement adapté à la mise en œuvre d'un procédé de transmission série selon un mode de réalisation de l'invention dans lequel la transmission d'une impulsion d'alimentation du deuxième circuit 2 par le premier circuit 1 peut être acquittée de façon bien contrôlée. Nous reviendrons sur la description détaillée du mode de réalisation illustré sur la figure 5 lorsque nous détaillerons la procédure d'acquittement illustrée sur les figures 3a et 3b.

Le procédé de transmission série selon un mode de réalisation de l'invention va maintenant être décrit en référence à la figure 1.

Le procédé de transmission série de données selon le mode de réalisation illustré sur la figure 1 comprend la transmission, depuis le premier circuit 1 à au moins un parmi des deuxièmes circuits 2, via une ligne de liaison électrique 3 entre le premier circuit 1 et le deuxième circuit 2, et en référence à une ligne de masse 4 (GND) commune aux circuits 1, 2, d'une série d'impulsions telle qu'illustrée sur la figure 1. Par la suite, on parlera « du » deuxième circuit 2 sans exclure qu'il puisse s'agir « dudit au moins un » deuxième circuit 2, et donc de plusieurs deuxièmes circuits 2.

La série d'impulsions comprend notamment des impulsions dites de donnée 101. Chaque impulsion de donnée 101 permet à la fois d'alimenter électriquement le deuxième circuit 2 et de transmettre une donnée interprétable par le deuxième circuit 2. Chaque impulsion de donnée 101 est donc également une impulsion d'alimentation.

Après un certain temps à compter de l'origine de l'axe des temps illustré sur la figure 1, la série d'impulsions comprend tout d'abord une première impulsion de donnée 101. Cette première impulsion de donnée 101 est par exemple paramétrée pour transmettre une donnée de bit égal à 0 ; Plus particulièrement, la première impulsion de donnée 101 peut être paramétrée pour présenter une première durée *t1* correspondant à la donnée de bit égal à 0. Une fois cette première durée d'impulsion *t1* atteinte, le procédé comprend une première coupure 110 de l'alimentation du deuxième circuit 2 par le premier circuit 1.

La première coupure 110 est fléchée sur la figure 1 comme étant réalisée à l'instant suivant immédiatement la première durée *t1.* Cette illustration peut donc faire paraître la coupure comme étant instantanée. Cependant, la première coupure 110 est potentiellement maintenue dans le temps, notamment de sorte à induire l'arrêt du deuxième circuit faute d'alimentation.

L'on comprend que chaque coupure 110 peut durer un temps indéterminé. Ce temps n'a effectivement pas d'autres limites supérieures que celles nécessitées, ou compatibles, avec l'application visée, cette dernière pouvant être nécessairement limitée dans le temps.

De préférence avant que la première impulsion de donnée 101 ne prenne fin, et en tout cas avant que la première coupure 110 n'induise l'arrêt de fonctionnement du deuxième circuit 2, la donnée de bit égal à 0 transmise via la première impulsion de donnée 101 est stockée sur le support de mémorisation non volatile 21 du deuxième circuit 2.

Après la première coupure 110, la série d'impulsions telle qu'illustrée comprend une deuxième impulsion de donnée 101. Cette deuxième impulsion de donnée 101 est paramétrée pour transmettre une donnée de bit égal à 1. Le cas échéant, la deuxième impulsion de donnée 101 présente une deuxième durée t2 correspondant à la donnée de bit égal à 1.

Une deuxième coupure 110 est réalisée par exemple dans l'une des conditions décrites ci-dessus relativement à la première coupure 110.

De préférence, avant que la deuxième impulsion de donnée 101 ne prenne fin, c'est-à-dire avant que la deuxième coupure 110 ne soit réalisée, la donnée de bit égal à 1 transmise via la deuxième impulsion de donnée 101 est stockée sur le support de mémorisation non volatile 21 du deuxième circuit 2. Le stockage de la donnée de bit égal à 1 transmise via la deuxième impulsion de donnée 101 est réalisée de façon corrélée au stockage de la donnée de bit égal à 0 transmise via la première impulsion de donnée 101.

Il en va ainsi pour les impulsions de donnée 101 qui suivent, de sorte que soit stockée, selon l'exemple illustré sur la figure 1, la série de bits: 0110...0, sur le support de mémorisation 21 du deuxième circuit 2. Ce stockage est réalisé de sorte que la série de bits soit lisible et interprétable par le circuit intégré 22 du deuxième circuit 2. Les trois petits points intégrés dans cette série de bits sont liés au fait que la totalité de la série d'impulsions de donnée 101 n'est pas nécessairement illustrée sur la figure 1 ; certaines ont pu être omises de cette représentation graphique à fin de concision. En effet, les deux traits obliques et parallèles entre eux croisant l'axe des abscisses sur le graphe illustré sur la figure 1 correspondent à la non-illustration d'une impulsion de donnée 101, d'une série d'impulsions de donnée 101, voire une succession de séries d'impulsions de données 101, non représentées. Pendant cette période non représentée, des données peuvent donc avoir été transmises qui sont dans la série de bits ci-dessus représentées par les trois petits points.

Comme illustré sur la figure 1, la série d'impulsions illustrée comprend ensuite une impulsion de donnée dite de contrôle 104. Cette impulsion de donnée de contrôle 104 est paramétrée pour transmettre une valeur de contrôle d'une quantité de données. Ladite quantité de données est par exemple celle destinée à être transmise par la série d'impulsions de donnée 101. Elle peut également correspondre à la quantité de données transmise via la succession de séries susmentionnée. Le cas échéant, l'impulsion de donnée de contrôle 104 présente une cinquième durée *t5* correspondant à ladite valeur de contrôle.

Cette valeur de contrôle est stockée sur le support de mémorisation 21 du deuxième circuit, de préférence avant que l'impulsion de donnée de contrôle 104 ne prenne fin. Elle est destinée par exemple à permettre de contrôler la validité d'une commande codée sous la forme d'une série de bits, voire d'une série d'octets, transmise de la façon décrite ci-dessus. Ce type de contrôle de validité d'une information transmise s'apparente à un protocole connu sous l'appellation « contrôle de redondance cyclique » ou protocole CRC. Le procédé selon cette particularité permet ainsi au moins de s'assurer que toutes les données attendues ont bien été transmises au deuxième circuit 2 et stockées sur son support de mémorisation 21 de façon appropriée. Le procédé selon cette particularité peut également permettre de vérifier que la commande stockée sur le support de mémorisation 21 du deuxième circuit est interprétable et exécutable par le circuit intégré 22 du deuxième circuit.

Selon le mode de réalisation illustré sur la figure 1, l'impulsion de donnée de contrôle est suivie d'une coupure d'alimentation 110, puis d'une impulsion dite de traitement 105. Comme les impulsions de donnée 101, cette impulsion de traitement 105 est transmise depuis le premier circuit 1 au deuxième circuit 2, via la ligne de liaison électrique 3 et en référence à la ligne de masse 4. L'impulsion de traitement 105 se distingue d'une impulsion de donnée 101 en ce qu'elle ne porte pas nécessairement une donnée destinée à être stockée sur le support de mémorisation 21 du deuxième circuit. L'impulsion de traitement 105 est, comme son nom l'indique, destinée à donner un ordre de traitement de la commande précédemment transmise par son interprétation et son exécution, éventuellement précédées de sa validation. L'impulsion de traitement 105 peut être paramétrée pour transmettre un ordre de traitement de ladite commande. De préférence avant que celle-ci ne prenne fin, et en tout cas avant que le deuxième circuit 2 ne s'éteigne faute d'alimentation, la commande est interprétée et exécutée, et éventuellement préalablement validée, par le circuit intégré 22 du deuxième circuit. Le cas échéant, l'impulsion de traitement 105 présente une sixième durée t6 par exemple supérieure, de préférence strictement supérieure, à la durée de chacune des impulsions de donnée 101.

Chaque commande peut comprendre un nombre prédéterminé de bits, de séries de bits, voire de séries d'octets. De façon correspondante, chaque série d'impulsions de donnée 101, voire chaque succession de séries d'impulsions de donnée 101, comprend un nombre déterminé d'impulsions de donnée 101. De la sorte, l'impulsion succédant à ce nombre prédéterminé d'impulsions de donnée 101 peut être d'une part paramétrée par le premier circuit 1 pour permettre l'interprétation et l'exécution, voire la validation, de la commande transmise, d'autre part directement (c'est-à-dire dès le début de sa transmission au deuxième circuit) interprétée par le deuxième circuit 2 comme un ordre d'interprétation et d'exécution, voire de validation, de la commande transmise.

Comme discuté plus haut, l'interprétation et l'exécution de la commande peut comprendre une mise à jour du dispositif d'affichage 5, 23 relié au circuit intégré 22 du deuxième circuit 2.

Un autre mode de réalisation du procédé selon l'invention va maintenant être décrit en référence à la figure 2.

Cet autre mode de réalisation du procédé selon l'invention comporte des étapes identiques à celles précédemment décrites en référence à la figure 1. Notamment, les impulsions de donnée 101, leur mode de transmission série, leur paramétrage, les données qu'elles permettent de transmettre, les coupures d'alimentation 110 peuvent être tels que décrits ci-dessus. Par conséquent, l'on s'attache essentiellement ci-dessous à décrire les différences entre les deux modes de réalisation illustrés.

Selon son mode de réalisation illustré sur la figure 2, le procédé de transmission série comprend premièrement la transmission d'une impulsion de donnée initiale 102. Cette impulsion de donnée initiale 102 est paramétrée pour transmettre une donnée d'initialisation d'une série d'impulsions. Le procédé comprend ensuite la transmission d'une série d'impulsions de données 101 tel que décrite ci-dessus. Le procédé de transmission série comprend ensuite la transmission d'une impulsion de donnée finale 103. Cette impulsion de donnée finale 103 est paramétrée pour transmettre une donnée de fin de série d'impulsions de données 101. L'une correspondante parmi la donnée d'initialisation et la donnée de fin de série peut correspondre à une succession de bits prédéterminée, voire un ou plusieurs octets prédéterminés. Le cas échéant, l'impulsion de donnée initiale 102 présente une troisième durée *t3* correspondant à la donnée d'initialisation de série et l'impulsion de donnée finale 103 présente une quatrième durée *t4* correspondant à la donnée de fin de série.

Le procédé permet ainsi la mise en œuvre d'un protocole de type « start/stop ». Les impulsions de donnée initiale 102 et de donnée finale 103 sont détectables et interprétables en tant que telles par le circuit intégré 22 du deuxième circuit. En quelque sorte, elles encadrent des impulsions de donnée 101 qui définissent une commande, ou à tout le moins une portion de commande, interprétable et exécutable par le circuit intégré 22 du deuxième circuit 2.

Selon l'exemple de réalisation illustré sur la figure 2, le procédé comprend ensuite une impulsion de traitement 105, toujours paramétrée pour transmettre un ordre de traitement de la commande précédemment transmise. L'impulsion de traitement 105 est paramétrée pour succéder directement à une impulsion de donnée 101, ici une impulsion de donnée finale 103. Ces deux impulsions 105 et 101 (ou ici 105 et 103) forment une seule et même impulsion dite de donnée et de traitement paramétrée pour permettre, de préférence avant que celle-ci ne prenne fin et en tout cas avant le deuxième circuit ne s'éteigne faute d'alimentation, le stockage de la donnée transmise, et l'interprétation et l'exécution de la commande. L'impulsion de traitement 105 peut donc ne faire qu'une avec une impulsion de donnée 101, par exemple avec une impulsion de donnée finale 103, achevant la transmission de la commande.

Le procédé selon l'un ou l'autre des modes de réalisation décrits ci-dessus en référence aux figures 1 et 2, ou le procédé selon tout autre mode de réalisation hybride, peut être répété pour obtenir l'interprétation et l'exécution d'une nouvelle commande aboutissant le cas échéant à une nouvelle mise à jour du dispositif d'affichage 5, 23. Le procédé permet ainsi de fournir une information mise à jour au travers du dispositif d'affichage 5, 23.

Chaque impulsion de donnée 101, 102, 103 et 104 est donc paramétrée pour présenter une durée supérieure au temps nécessaire à la fois au démarrage du deuxième circuit 2 et au stockage par le deuxième circuit 2 de la donnée transmise sur son support de mémorisation non volatile 21.

Les notions de temps de démarrage et d'arrêt du deuxième circuit 2 et leur influence sur la mise en œuvre du procédé va maintenant être discutée en référence aux figures 3a et 3b.

Les graphes des figures 3a et 3b peuvent être lus comparativement deux à deux comme des représentations synchronisées entre elles par la correspondance de leurs abscisses. Plus particulièrement, le graphe de la figure 3a représente un signal électrique tel que mesurable au niveau du premier circuit 1, tandis que le graphe de la figure 3b représente un signal électrique tel que mesurable au niveau du deuxième circuit, ces deux signaux électriques ayant des évolutions temporelles liées entre elles de la façon décrite ci-dessous. Le graphe de la figure 3a représente l'évolution en fonction du temps de la tension en entrée/sortie (I/O) du premier circuit 1 et le graphe de la figure 3b représente l'évolution en fonction du temps de la tension en entrée/sortie (I/O) du deuxième circuit 2.

En se référant à la première impulsion, de valeur +V, représentée sur le graphe de la figure 3a, on s'aperçoit que simultanément à son commencement, un signal électrique au niveau du deuxième circuit apparaît qui croît en un temps donné, typiquement de l'ordre de quelques microsecondes, pour atteindre une valeur seuil +V dont la transmission permet au premier circuit 1 d'alimenter électriquement le deuxième circuit 2. Le temps de croissance de la tension au niveau du deuxième circuit 2 indique que ce dernier ne démarre pas de façon instantané, mais en mettant un certain temps dépendant de ses composants électroniques et de leur agencement relatif.

En se référant à la dernière impulsion, de valeur +V, représentée sur le graphe de la figure 3a, on s'aperçoit que simultanément à sa fin, un signal électrique au niveau du deuxième circuit décroît en un temps donné, typiquement de l'ordre de quelques microsecondes, pour atteindre, depuis la valeur seuil +V, une valeur nulle pour laquelle le deuxième circuit 2 est éteint faute d'alimentation. Le temps de décroissance de la tension au niveau du deuxième circuit 2 indique que ce dernier ne s'éteint pas de façon instantané, mais en mettant un certain temps dépendant là encore de ses composants électroniques et de leur agencement relatif.

Il est envisagé que les temps de croissance et de décroissance de la tension au niveau du deuxième circuit soient intégrés dans la mise en œuvre du procédé selon l'invention.

Une façon d'intégrer avantageusement ces temps de croissance et de décroissance de la tension au niveau du deuxième circuit consiste à permettre un acquittement par le deuxième circuit 2 au premier circuit 1 de la bonne réception d'une impulsion. Une procédure d'acquittement selon un mode de réalisation de l'invention va maintenant être décrite en référence aux figures 3a, 3b et 5.

En se référant à la première impulsion, de valeur +V, représentée sur le graphe de la figure 3a, la coupure d'alimentation 110 correspond à une mise à un niveau logique 0 d'une sortie du premier circuit 1. Chaque acquittement comprend alors un basculement en entrée de la sortie du premier circuit 1. Le deuxième circuit 2 détecte la mise au niveau logique 0 de la sortie du premier circuit 1. Cette détection comprend par exemple la détection du passage de sa tension d'alimentation Vcc (par exemple égale à 5 V) sous une première valeur seuil Vseuil(1) prédéterminée. Sitôt cette détection, le deuxième circuit peut basculer son entrée en sortie et forcer une mise à un niveau logique 1 de sa sortie, de sorte d'émettre une impulsion électrique vers le premier circuit 1. En conséquence, la tension au niveau du deuxième circuit peut être forcée à un niveau logique 0 alors qu'elle est en décroissance du fait de la coupure d'alimentation 110. Ce phénomène est illustré sur la figure 3b par la brusque chute de tension au niveau du deuxième circuit 2, suite à la détection par le deuxième circuit 2 du passage de sa tension d'alimentation Vcc sous une première valeur seuil Vseuil(1). L'impulsion électrique est effectivement générée par le deuxième circuit 2 grâce à l'énergie électrique qu'il emmagasine encore. Cette impulsion est donc potentiellement d'une tension supérieure à une deuxième valeur seuil Vseuil(2) prédéterminée. La première valeur seuil Vseuil(1) est par exemple supérieure à la deuxième valeur seuil Vseuil(2). La deuxième valeur seuil Vseuil(2) est paramétrée de sorte que la tension de l'impulsion générée par le deuxième circuit 2 puisse y être supérieure et de sorte que tout dépassement de tension au-dessus de la deuxième valeur seuil Vseuil(2) puisse être détecté en entrée du premier circuit 1.

Cette fonctionnalité d'acquittement peut nécessiter l'ajout d'une diode et d'une résistance de rappel *R* de la façon illustrée schématiquement sur la figure 5. Remarquons que la résistance de rappel y est montée en « pull-down » selon la terminologie anglo-saxonne.

Le procédé de transmission série peut ainsi permettre d'acquitter au moins une impulsion, voire chaque impulsion, transmise. Chaque acquittement est paramétré pour succéder directement à une coupure d'alimentation 110 correspondante.

La durée des impulsions dépend du temps de démarrage de deuxième circuit 2 après montée de l'alimentation, et de la technologie utilisée pour le support de mémorisation non volatile 21.

Par exemple, une mémoire flash à une durée de démarrage d'environ 1 ms (milliseconde) et est capable de stocker la valeur d'un bit en moins de 1 ms. On peut avoir :
- t3 = 2 ms ;
- t2 = 3 ms ;
- t1 = 4 ms ; et
- t6 ≥ 5 ms,
où t3 est la durée d'une impulsion de donnée initiale 102, *t2* est la durée d'une impulsion de donnée 101 de bit égal à 1, *t1* est la durée d'une impulsion de donnée 101 de bit égal à 0, et t6 est la durée d'une impulsion de donnée finale 103 et/ou de traitement 105.

Avec une technologie EEPROM, le temps d'écriture de la valeur d'un bit est d'environ 5 ms. On peut avoir :
- t3 = 6 ms ;
- t2 = 11 ms ;
- t1 = 16 ms ; et
- t6 ≥ 21 ms,
où, comme auparavant, t3 est la durée d'une impulsion de donnée initiale 102, *t2* est la durée d'une impulsion de donnée 101 de bit égal à 1, *t1* est la durée d'une impulsion de donnée 101 de bit égal à 0, et t6 est la durée d'une impulsion de donnée finale 103 et/ou de traitement 105.

La durée de l'impulsion de traitement 105 est fonction de l'application envisagée. Par exemple, la durée de l'impulsion de traitement 105 sera de quelques secondes pour pouvoir traiter la mise à jour d'un dispositif d'affichage de type papier électronique. Le traitement peut commencer à partir de la détection d'une impulsion de durée supérieure à la durée d'une impulsion de donnée finale 103.

Ces durées sont données à titre indicatif et peuvent varier en fonction de la technologie employée et les optimisations souhaitées.

Le protocole de vérification de la validité de la commande transmise et stockée sur le support de mémorisation non volatile 21 du deuxième circuit 2 est exemplifié ci-dessous.

Une fois les octets reconstitués à partir des bits, on utilise un protocole permettant de vérifier la validité de la trame. Par exemple, une trame peut s'écrire :
< Octet indiquant la longueur de la trame (LG) >
< Octet 1 >
< Octet2 >
< Octet LG >
< CRC >

A la détection de l'impulsion de traitement 105, la trame est vérifiée à partir des données stockées sur le support de mémorisation non volatile 21 du deuxième circuit 2 ; et, si la trame est valide, la commande correspondante est exécutée.

L'invention n'est pas limitée aux modes de réalisations précédemment décrits et s'étend à tous les modes de réalisation couverts par les revendications.

Par exemple, chaque impulsion peut être paramétrée de sorte à présenter au moins l'une parmi une amplitude du courant d'alimentation électrique et une fréquence d'un signal d'alimentation électrique, propre à alimenter le deuxième circuit et à correspondre à une donnée transmise. Il est donc envisageable que chaque donnée transmise ne corresponde plus à une durée d'impulsion, mais à une amplitude et/ou une fréquence. Il est donc envisageable que chaque donnée transmise ne corresponde plus seulement à une durée d'impulsion, mais également à une amplitude et/ou une fréquence.

Lorsque la fréquence de l'impulsion est utilisée, le premier circuit 1 génère un courant alternatif qu'il transmet au deuxième circuit 2 aux fins d'alimentation électrique et de transmission série de données. Le premier circuit 1 peut être configuré en conséquence. Par exemple, il peut être nécessaire que le premier circuit 1 ou le deuxième circuit 2 intègre un pont de diode et une capacité de filtrage.

Notons que le protocole d'acquittement décrit plus haut n'est pas adapté à une alimentation en courant alternatif.

Une autre variante du procédé de transmission série par l'alimentation, consiste à générer des impulsions à 0 (l'état alimenté étant avec l'alimentation à 1) suffisamment courtes pour que l'alimentation du deuxième circuit 2 ne redescende pas complètement. Le deuxième circuit 2 comporte alors avantageusement une capacité de filtrage au niveau de son alimentation.

## Revendications

1. Procédé de transmission série de données comprenant la transmission, depuis un premier circuit électronique (1) à au moins un deuxième circuit électronique (2), via une ligne de liaison électrique (3) entre le premier circuit (1) et le deuxième circuit (2), et en référence à une ligne de masse (4) commune aux circuits (1, 2), d'au moins une série d'impulsions dites de donnée (101),
le procédé étant **caractérisé en ce que** chaque impulsion de donnée (101) permet à la fois d'alimenter électriquement le deuxième circuit (2) et de transmettre une donnée d'une série de données interprétable par le deuxième circuit (2), et **en ce que** :
le procédé comprend au moins les étapes suivantes :
- couper (110) l'alimentation du deuxième circuit (2) par le premier circuit (1) entre deux impulsions de donnée (101) successives, et
- pour chaque impulsion de donnée (101) et avant que le deuxième circuit ne s'éteigne faute d'alimentation, stocker, sur un support de mémorisation non volatile (21) du deuxième circuit (2), la donnée transmise par cette impulsion de donnée (101).

2. Procédé selon la revendication précédente, dans lequel la coupure (110) de l'alimentation entre deux impulsions de donnée (101) successives est paramétrée de sorte que le deuxième circuit (2) s'éteint faute d'alimentation.

3. Procédé selon l'une quelconque des revendications précédentes, dans lequel chaque impulsion de donnée (101) est paramétrée de sorte que la donnée transmise dépende d'une durée de cette impulsion, la durée de chaque impulsion de donnée (101) étant le cas échéant mesurable par le deuxième circuit (2) par rapport à une fréquence d'horloge qui lui est propre.

4. Procédé selon l'une quelconque des revendications précédentes, dans lequel au moins une impulsion de donnée (101) de chaque série est paramétrée pour transmettre l'une parmi une donnée de bit égal à 0 et une donnée de bit égal à 1, le cas échéant ladite au moins une impulsion de donnée (101) présentant respectivement l'une parmi une première durée *t1* correspondant à la donnée de bit égal à 0 et une deuxième durée *t2* correspondant à la donnée de bit égal à 1.

5. Procédé selon l'une quelconque des revendications précédentes, dans lequel chaque série d'impulsions de donnée (101) comprend un nombre prédéterminé d'impulsions de donnée (101).

6. Procédé selon l'une quelconque des revendications précédentes, dans lequel chaque série d'impulsions de donnée (101) comprend au moins l'une parmi une impulsion de donnée initiale (102) paramétrée pour transmettre une donnée d'initialisation de série et une impulsion de donnée finale (103) paramétrée pour transmettre une donnée de fin de série, l'une correspondante parmi la donnée d'initialisation et la donnée de fin de série correspondant à une succession de bits prédéterminée, le cas échéant l'impulsion de donnée initiale (102) présentant une troisième durée t3 correspondant à la donnée d'initialisation de série et l'impulsion de donnée finale (103) présentant une quatrième durée t4 correspondant à la donnée de fin de série.

7. Procédé selon l'une quelconque des revendications précédentes, dans lequel la série d'impulsions de donnée (101), voire une succession de séries, comprend, de préférence périodiquement, au moins une impulsion de donnée dite de contrôle (104) paramétrée pour transmettre une valeur de contrôle d'une quantité de données destinée à être transmise par la même série d'impulsions de donnée (101), voire par ladite succession de séries, le cas échéant ladite au moins une impulsion de donnée de contrôle (104) présentant une cinquième durée *t5* correspondant à ladite valeur de contrôle.

8. Procédé selon l'une quelconque des revendications précédentes, dans lequel le stockage des données transmises par les impulsions de donnée (101) d'une même série, voire d'une succession de séries, est paramétré de sorte à former un ensemble de bits, voire un ensemble d'octets, codant une commande interprétable et exécutable par un circuit intégré (22) du deuxième circuit (2).

9. Procédé selon la revendication précédente, comprenant la transmission depuis le premier circuit (1) au deuxième circuit (2), via la ligne de liaison électrique (3) et en référence à la ligne de masse (4), d'une impulsion dite de traitement (105) paramétrée pour transmettre un ordre de traitement de ladite commande,
le procédé comprenant au moins l'étape suivante : pour chaque impulsion de traitement (105) et avant que celle-ci ne prenne fin, interpréter et exécuter la commande,
le cas échéant l'impulsion de traitement (105) présentant une sixième durée t6 supérieure à la durée de chacune des impulsions de donnée (101).

10. Procédé selon la revendication précédente, dans lequel l'impulsion de traitement (105) est paramétrée pour succéder directement à une impulsion de donnée (101) de sorte que ces deux impulsions forment une seule et même impulsion de donnée et de traitement paramétrée pour permettre, avant que celle-ci ne prenne fin, le stockage de la donnée transmise, et l'interprétation et l'exécution de la commande, sans que le deuxième circuit (2) ne s'éteigne faute d'alimentation.

11. Procédé selon l'une quelconque des deux revendications précédentes, dans lequel l'interprétation et l'exécution de la commande comprend au préalable une vérification de validité de la commande.

12. Procédé selon l'une quelconque des revendications précédentes comprenant en outre l'étape suivante : acquitter au moins une impulsion, voire chaque impulsion, transmise, chaque acquittement étant paramétré pour succéder directement à une coupure d'alimentation correspondante.

13. Procédé selon l'une quelconque des revendications 9 à 12, dans lequel l'interprétation et l'exécution de la commande comprend une mise à jour d'un dispositif d'affichage (5, 23), tel qu'un papier électronique, relié au circuit intégré (22) du deuxième circuit (2), le cas échéant la mise à jour du dispositif d'affichage (5, 23) permettant l'affichage d'une information définie par la commande.

14. Procédé selon l'une quelconque des revendications 9 à 12 et la revendication 13, comprenant une répétition des étapes du procédé (100) pour obtenir que l'interprétation et l'exécution de la commande comprennent une nouvelle mise à jour du dispositif d'affichage (5, 23).

15. Système de transmission série de donnés comprenant :
- un premier circuit électronique (1) et
- au moins un deuxième circuit électronique (2), le premier circuit (1) et chaque deuxième circuit (2) étant reliés entre eux via une ligne de liaison électrique (3) et une ligne de masse (4) commune aux circuits (1, 2),
le système étant **caractérisé en ce que** :
pour la transmission, depuis le premier circuit (1) à au moins un deuxième circuit (2), via la ligne de liaison électrique (3) et en référence à la ligne de masse (4), d'au moins une série d'impulsions dites de donnée (101), chaque impulsion de donnée (101) permet à la fois d'alimenter électriquement le deuxième circuit (2) et de transmettre une donnée d'une série de données interprétable par le deuxième circuit (2), **en ce que** :
le premier circuit (1) comprend un interrupteur (11) de l'alimentation du deuxième circuit (2) par le premier circuit (1) configuré pour couper l'alimentation entre deux impulsions de donnée (101) successives, et **en ce que** :
le deuxième circuit (2) comprend un support de mémorisation non volatile (21) configuré pour stocker la donnée transmise par chaque impulsion de donnée (101) avant que le deuxième circuit (2) ne s'éteigne faute d'alimentation.

## Patentansprüche

1. Verfahren zur seriellen Übertragung von Daten, das die Übertragung mindestens einer Serie von sogenannten Datenimpulsen (101) von einer ersten elektronischen Schaltung (1), über eine elektrische Verbindungsleitung (3) zwischen der ersten Schaltung (1) und der zweiten Schaltung (2) und unter Bezugnahme auf eine gemeinsame Masseleitung (4) der Schaltungen (1, 2), an mindestens eine zweite elektronische Schaltung (2) umfasst,
wobei das Verfahren **dadurch gekennzeichnet ist, dass** jeder Datenimpuls (101) gleichzeitig das Versorgen der zweiten Schaltung (2) mit elektrischem Strom und das Übertragen einer Dateneinheit aus einer Serie von Daten ermöglicht, die von der zweiten Schaltung (2) interpretiert werden kann, und dadurch, dass:
das Verfahren mindestens die folgenden Schritte umfasst:
- Unterbrechen (110) der Stromversorgung der zweiten Schaltung (2) durch die erste Schaltung (1) zwischen zwei aufeinanderfolgenden Datenimpulsen (101), und
- bei jedem Datenimpuls (101) und bevor sich die zweite Schaltung mangels Stromversorgung abschaltet, Speichern der von diesem Datenimpuls (101) übertragenen Dateneinheit auf einem nicht flüchtigen Speicherträger (21) der zweiten Schaltung (2).

2. Verfahren nach dem vorstehenden Anspruch, wobei die Unterbrechung (110) der Stromversorgung zwischen zwei aufeinanderfolgenden Datenimpulsen (101) so parametrisiert ist, dass sich die zweite Schaltung (2) mangels Stromversorgung abschaltet.

3. Verfahren nach einem der vorstehenden Ansprüche, wobei jeder Datenimpuls (101) so parametrisiert ist, dass die übertragene Dateneinheit von einer Dauer dieses Impulses abhängt, wobei die Dauer jedes Datenimpulses (101) gegebenenfalls von der zweiten Schaltung (2) in Bezug auf eine ihm eigene Taktfrequenz gemessen werden kann.

4. Verfahren nach einem der vorstehenden Ansprüche, wobei mindestens ein Datenimpuls (101) jeder Serie so parametrisiert ist, dass er eines aus einer Dateneinheit eines Bits gleich 0 und einer Dateneinheit eines Bits gleich 1 überträgt, wobei der mindestens eine Datenimpuls (101) gegebenenfalls jeweils eine aus einer ersten Dauer *t1,* die der Dateneinheit eines Bits gleich 0 entspricht, und einer zweiten Dauer *t2* aufweist, die der Dateneinheit eines Bits gleich 1 entspricht.

5. Verfahren nach einem der vorstehenden Ansprüche, wobei jede Serie von Datenimpulsen (101) eine vorbestimmte Anzahl von Datenimpulsen (101) umfasst.

6. Verfahren nach einem der vorstehenden Ansprüche, wobei jede Serie von Datenimpulsen (101) mindestens einen aus einem ersten Datenimpuls (102), der so parametrisiert ist, dass er eine Dateneinheit für den Anfang einer Serie überträgt, und einem letzten Datenimpuls (103) umfasst, der so parametrisiert ist, dass er eine Dateneinheit für das Ende einer Serie überträgt, wobei eine entsprechende aus der Anfangsdateneinheit und der Enddateneinheit einer Serie einer vorbestimmten Abfolge von Bits entspricht, wobei gegebenenfalls der erste Datenimpuls (102) eine dritte Dauer *t3* aufweist, die der Anfangsdateneinheit einer Serie entspricht, und der letzte Datenimpuls (103) eine vierte Dauer *t4* aufweist, die der Enddateneinheit einer Serie entspricht.

7. Verfahren nach einem der vorstehenden Ansprüche, wobei die Serie von Datenimpulsen (101), ja sogar eine Abfolge von Serien, vorzugsweise periodisch mindestens einen sogenannten Steuerdatenimpuls (104) umfasst, der so parametrisiert ist, dass er einen Steuerwert für eine Datenmenge überträgt, die von der gleichen Serie von Datenimpulsen (101), ja sogar der Abfolge von Serien, übertragen werden soll, wobei der mindestens eine Steuerdatenimpuls (104) gegebenenfalls eine fünfte Dauer t5 aufweist, die dem Steuerwert entspricht.

8. Verfahren nach einem der vorstehenden Ansprüche, wobei die Speicherung der von den Datenimpulsen (101) der gleichen Serie, ja sogar einer Abfolge von Serien übertragenen Daten so parametrisiert ist, dass ein Satz von Bits, ja sogar ein Satz von Bytes gebildet wird, der einen Befehl codiert, welcher von einer integrierten Schaltung (22) der zweiten Schaltung (2) interpretiert und ausgeführt werden kann.

9. Verfahren nach dem vorstehenden Anspruch, das die Übertragung eines sogenannten Verarbeitungsimpulses (105) von der ersten Schaltung (1) über die elektrische Verbindungsleitung (3) und unter Bezugnahme auf die Masseleitung (4) an die zweite Schaltung (2) umfasst, welcher so parametrisiert ist, dass er eine Verarbeitungsreihenfolge des Befehls überträgt,
wobei das Verfahren mindestens den folgenden Schritt umfasst: bei jedem Verarbeitungsimpuls (105) und bevor dieser endet, Interpretieren und Ausführen des Befehls,
wobei der Verarbeitungsimpuls (105) gegebenenfalls eine sechste Dauer t6 aufweist, die größer ist als die Dauer jedes der Datenimpulse (101).

10. Verfahren nach dem vorstehenden Anspruch, wobei der Verarbeitungsimpuls (105) so parametrisiert ist, dass er direkt auf einen Datenimpuls (101) folgt, sodass diese zwei Impulse einen einzigen Daten- und Verarbeitungsimpuls bilden, der so parametrisiert ist, dass er, bevor er endet, das Speichern der übertragenen Dateneinheit und das Interpretieren und das Ausführen des Befehls ermöglicht, ohne, dass sich die zweite Schaltung (2) mangels Stromversorgung abschaltet.

11. Verfahren nach einem der zwei vorstehenden Ansprüche, wobei das Interpretieren und das Ausführen des Befehls im Vorfeld ein Verifizieren der Gültigkeit des Befehls umfasst.

12. Verfahren nach einem der vorstehenden Ansprüche, das weiter den folgenden Schritt umfasst: Quittieren mindestens eines Impulses, ja sogar jedes Impulses, der übertragen wird, wobei jede Quittierung so parametrisiert ist, dass sie direkt auf eine entsprechende Unterbrechung der Stromversorgung folgt.

13. Verfahren nach einem der Ansprüche 9 bis 12, wobei das Interpretieren und das Ausführen des Befehls ein Aktualisieren einer Anzeigevorrichtung (5, 23), wie etwa eines elektronischen Papiers umfasst, das mit der integrierten Schaltung (22) der zweiten Schaltung (2) verbunden ist, wobei das Aktualisieren der Anzeigevorrichtung (5, 23) gegebenenfalls das Anzeigen einer vom Befehl definierten Information ermöglicht.

14. Verfahren nach einem der Ansprüche 9 bis 12 und Anspruch 13, das ein Wiederholen der Schritte des Verfahrens (100) umfasst, um zu bewirken, dass das Interpretieren und das Ausführen des Befehls ein erneutes Aktualisieren der Anzeigevorrichtung (5, 23) umfassen.

15. System zur seriellen Übertragung von Daten, umfassend:
- eine erste elektronische Schaltung (1), und
- mindestens eine zweite elektronische Schaltung (2), wobei die erste Schaltung (1) und jede zweite Schaltung (2) über eine elektrische Verbindungsleitung (3) und eine gemeinsame Masseleitung (4) der Schaltungen (1, 2) miteinander verbunden sind,
wobei das System **dadurch gekennzeichnet ist, dass**:
bei der Übertragung mindestens einer Serie von sogenannten Datenimpulsen (101) von der ersten Schaltung (1) über die elektrische Verbindungsleitung (3) und unter Bezugnahme auf die Masseleitung (4) an mindestens eine zweite Schaltung (2), jeder Datenimpuls (101) gleichzeitig das Versorgen der zweiten Schaltung (2) mit elektrischem Strom und das Übertragen einer Dateneinheit aus einer Serie von Daten ermöglicht, die von der zweiten Schaltung (2) interpretiert werden kann, dadurch, dass:
die erste Schaltung (1) einen Schalter (11) für die Stromversorgung der zweiten Schaltung (2) durch die erste Schaltung (1) umfasst, der so ausgelegt ist, dass er die Stromversorgung zwischen zwei aufeinanderfolgenden Datenimpulsen (101) unterbricht, und dadurch, dass:
die zweite Schaltung (2) einen nicht flüchtigen Speicherträger (21) umfasst, der so ausgelegt ist, dass er die von jedem Datenimpuls (101) übertragene Dateneinheit speichert, bevor sich die zweite Schaltung (2) mangels Stromversorgung abschaltet.

## Claims

1. Data series transmission method comprising the transmission, from a first electronic circuit (1) to at least one second electronic circuit (2), via an electrical connection line (3) between the first circuit (1) and the second circuit (2), and in reference to a ground line (4) common to the circuits (1, 2), of at least one series of so-called data pulses (101),
the method being **characterised in that** each data pulse (101) allows both to electrically power the second circuit (2) and to transmit an item of data from a series of data interpretable by the second circuit (2), and **in that**:
the method comprises at least the following steps:
- cutting (110) the power of the second circuit (2) by the first circuit (1) between two successive data pulses (101), and
- for each data pulse (101) and before the second circuit is switched off due to stop in power, storing, on a non-volatile memory support (21) of the second circuit (2), the item of data transmitted by this data pulse (101).

2. Method according to the preceding claim, wherein the cutting (110) of the power between two successive data pulses (101) is configured such that the second circuit (2) is switched off due to stop in power.

3. Method according to any one of the preceding claims, wherein each data pulse (101) is configured such that the item of data transmitted depends on a duration of this pulse, the duration of each data pulse (101) being, if necessary, measurable by the second circuit (2) with respect to a clock pulse which is specific to it.

4. Method according to any one of the preceding claims, wherein at least one data pulse (101) of each series is configured to transmit one from among an item of bit data equal to 0 and an item of bit data equal to 1, if necessary said at least one data pulse (101) having respectively one from among a first duration t1 corresponding to the item of bit data equal to 0 and a second duration t2 corresponding to the item of bit data equal to 1.

5. Method according to any one of the preceding claims, wherein each series of data pulses (101) comprises a predetermined number of data pulses (101).

6. Method according to any one of the preceding claims, wherein each series of data pulses (101) comprises at least one from among an initial data pulse (102) configured to transmit an item of initialisation series data and a final data pulse (103) configured to transmit an item of end series data, one corresponding from among the item of initialisation data and the end series data corresponding to a predetermined succession of bits, if necessary the initial data pulse (102) having a third duration t3 corresponding to the initialisation series data and the final data pulse (103) having a fourth duration t4 corresponding to the end series data.

7. Method according to any one of the preceding claims, wherein the series of data pulses (101), even a succession of series, comprises, preferably periodically, at least one so-called control data pulse (104), configured to transmit a control value of a data quantity intended to be transmitted by the same series of data pulses (101), even by said succession of series, if necessary said at least one control data pulse (104) having a fifth duration t5 corresponding to said control value.

8. Method according to any one of the preceding claims, wherein the storage of data transmitted by the data pulses (101) of one same series, even a succession of series, is configured so as to form a set of bits, even a set of bytes, coding a command, interpretable and executable by an integrated circuit (22) of the second circuit (2).

9. Method according to the preceding claim, comprising the transmission from the first circuit (1) to the second circuit (2), via the electrical connection line (3) and in reference to the ground line (4), of a so-called processing pulse (105) configured to transmit an order for processing said command,
the method comprising at least the following step: for each processing pulse (105) and before this ends, interpreting and executing the command,
if necessary, the processing pulse (105) having a sixth duration t6 greater than the duration of each of the data pulses (101).

10. Method according to the preceding claim, wherein the processing pulse (105) is configured to succeed directly to a data pulse (101) such that these two pulses form one single and same data pulse and processing configured to allow, before this ends, the storage of the data transmitted, and the interpretation and the execution of the command, without the second circuit (2) being switched off due to stop in power.

11. Method according to any one of the two preceding claims, wherein the interpretation and the execution of the command comprises a verification of validity of the command beforehand.

12. Method according to any one of the preceding claims, further comprising the following step: clearing at least one pulse, even each pulse, transmitted, each clearing being configured to succeed directly to a corresponding cutting of power.

13. Method according to any one of claims 9 to 12, wherein the interpretation and the execution of the command comprises an updating of a display device (5, 23), such as an e-paper, connected to the integrated circuit (22) of the second circuit (2), if necessary the updating of the display device (5, 23) allowing the displaying of an item of information defined by the command.

14. Method according to any one of claims 9 to 12 and claim 13, comprising a repetition of the steps of the method (100) to obtain that the interpretation and the execution of the command comprise a new updating of the display device (5, 23).

15. Data series transmission system comprising:
- a first electronic circuit (1), and
- at least one second electronic circuit (2), the first circuit (1) and each second circuit (2) being connected together via an electric connection line (3) and a ground line (4) common to the circuits (1, 2),
the system being **characterised in that**:
for the transmission, from the first circuit (1) to at least one second circuit (2), via the electric connection line (3) and in reference to the ground line (4), of at least one series of so-called data pulses (101), each data pulse (101) allows both to electrically power the second circuit (2) and to transmit an item of data of a series of data interpretable by the second circuit (2), **in that**:
the first circuit (1) comprises a switch (11) for powering the second circuit (2) by the first circuit (1) configured to cut the power between two successive data pulses (101), and **in that**:
the second circuit (2) comprises a non-volatile memory support (21) configured to store the data transmitted by each data pulse (101) before the second circuit (2) is switched off due to stop in power.
